# EUROPEAN PATENT APPLICATION

(11) **EP 3 902 164 A1**
(43) Date of publication of application: **27.10.2021**
(21) Application number: 19901229.5
(22) Date of filing: 18.12.2019
(51) Int. Cl.: H04J 3/06

(54) **METHOD FOR DETERMINING PORT STATUS AND NETWORK NODE**

(30) Priority: 18.12.2018 CN 201811548092
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: HAN, Liuyan, Beijing 100032 (CN)
(74) Representative: GPI Brevets
(86) International application number: PCT/CN2019/126335
(87) International publication number: WO 2020/125683

(57) **Abstract**

Embodiments of the present disclosure provide a method for determining port state and a network node. The method includes: determining relevant information of a best synchronization source of the network node; determining relevant information of a best time source of a first port of the network node; determining a port state of the first port of the network node when a source of the best synchronization source of the network node is not the first port.

## Description

### CROSS-REFERENCE TO RELATED APPLICATION

The present application claims a priority of the Chinese patent application No. 201811548092.1 filed on December 18, 2018, which is incorporated herein by reference in its entirety.

### TECHNICAL FIELD

The present disclosure relates to the field of communication technology, in particular to a method for determining port state and a network node.

### BACKGROUND

The business of mobile communication systems, finance, and power systems requires time synchronization between network nodes. The network transmission time adopts Precise Time Protocol (PTP) to meet high-precision time requirements. PTP time synchronization adopts delay computation mechanism. Ports of master and slave devices exchange PTP messages to calculate a path delay and a time offset between the master and slave devices to realize time synchronization between the master and slave devices.

PTP port state includes: master state, slave state, passive state, etc.

After the port state is determined, each network node can track and synchronize according to the port state. If there is a packet change, the port state can be re-determined, that is, a change in a synchronization tracking path occurs.

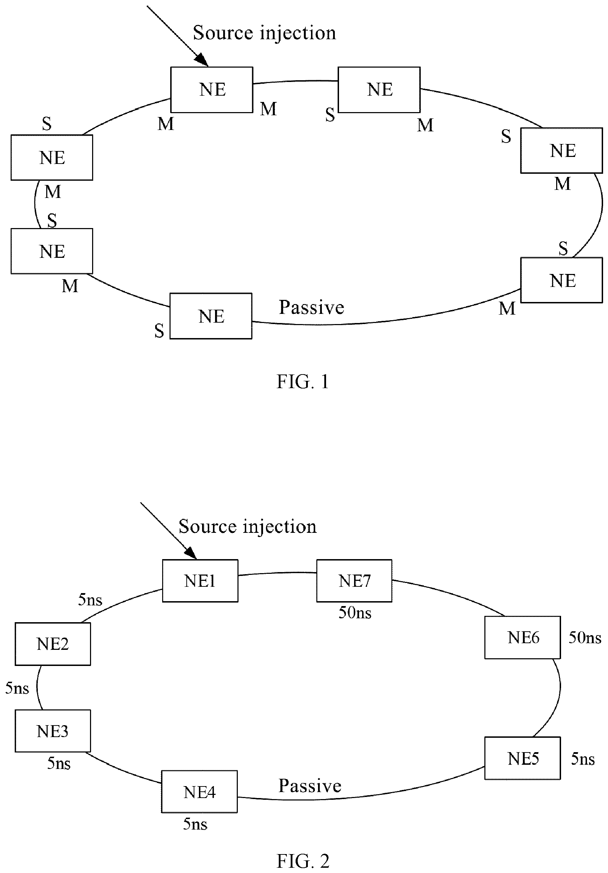

The passive state can prevent generation of a synchronization loop. According to the PTP protocol specification, the passive port is neither a master port on this path, nor will the port track and be synchronized with other ports. Therefore, the passive port is disconnected for an actual synchronization tracking path. A loop cannot be without a passive port, otherwise a synchronization tracking loop is easily formed, which will cause performance degradation. It is also not possible to generate passive ports at two ends of a path, otherwise no message will be sent on two sides. When switching is required, an updated synchronization message is not received and a source is reselected, causing synchronization loss. Referring to FIG. 1, it shows a decision result of a synchronization state of each port, by taking a ring network as an example.A passive port generation method in the related art is generated based on hop count. With development of time synchronization networks, time synchronization properties of intermediate network nodes are no longer the same, such as accuracy, so when selecting a best time source tracking and generating passive ports, the principle has changed. Previously, the hop count is used as the criterion. One with the shortest hop count is regarded as a best time source. When a difference between the numbers of synchronization hops of two port information is less than or equal to 1, one of the two ports will be decided to be in the passive state.

After the change, the optimal decision-making will adopt other principles, such as time accuracy of transmission path, or adopt other weighting factors in the hop count. Then under the new principle, compared with the hop count method, the tracking port will change, and accordingly the original method of generating passive ports is no longer applicable, because a port to be disconnected from the loop is no longer a port where the difference between the numbers of synchronization hops of the two port information is less than or equal to 1.

Therefore, when the method of selecting a best source is no longer the shortest hop count, the original method of generating passive ports is no longer applicable. If the method of generating passive ports in related art is still used, a determined tracking path may be broken, and can not be track normally. As shown in FIG. 2, the accuracy of each node is marked on the figure. If it is selected according to the path accuracy, NE5 should track a left half of the ring, that is, a tracking path should be NE1->NE2->NE3->NE4->NE5, but according to the passive port generation method in the related art, a passive port will be generated between NE4 and NE5, and the passive port does not send packets, and thus NE5 cannot track NE4.

It can be seen that the passive port generation method in the related art is generated based on the hop count and cannot be applied to other conditions for selecting synchronization sources.

### SUMMARY

Embodiments of the present disclosure provide a method for determining port state and a network node, and solve the problem of port state generation under different source selection principles of best time sources.

A first aspect of the embodiments of the present disclosure provides a method for determining port state, applied to a network node, including:
determining relevant information of a best synchronization source of the network node;
determining relevant information of a best time source of a first port of the network node;
determining a port state of the first port of the network node when a source of the best synchronization source of the network node is not the first port.

Optionally, determining the port state of the first port of the network node when the source of the best synchronization source of the network node is not the first port, includes:
when the source of the best synchronization source of the network node is not the first port, determining the port state of the first port of the network node according to the relevant information of the best synchronization source, relevant information of the network node, and relevant information of the best time source.

Optionally, determining the port state of the first port of the network node when the source of the best synchronization source of the network node is not the first port, includes:
when the source of the best synchronization source of the network node is not the first port, and a type of the best time source does not belong to an old protocol type, determining the port state of the first port of the network node according to the relevant information of the best synchronization source, the relevant information of the network node, and the relevant information of the best time source.

Optionally, determining the port state of the first port of the network node when the source of the best synchronization source of the network node is not the first port, includes:
when the source of the best synchronization source of the network node is not the first port, and the type of the best time source belongs to an old protocol type, determining the port state of the first port of the network node according to the relevant information of the best synchronization source and the relevant information of the best time source.

Optionally, the determining the port state of the first port of the network node according to the relevant information of the best synchronization source, the relevant information of the network node, and the relevant information of the best time source includes:
obtaining relevant information of the updated best synchronization source according to the relevant information of the best synchronization source and the relevant information of the network node;
determining the port state of the first port of the network node according to the relevant information of the updated best synchronization source and the relevant information of the best time source.

Optionally, the determining the port state of the first port of the network node according to the relevant information of the updated best synchronization source and the relevant information of the best time source includes:
if the relevant information of the updated best synchronization source is better than the relevant information of the best time source, determining that the port state of the first port of the network node is a master state.

Optionally, determining the port state of the first port of the network node according to the relevant information of the updated best synchronization source and the relevant information of the best time source includes:
if the relevant information of the updated best synchronization source is not better than the relevant information of the best time source, determining that the port state of the first port of the network node is a passive state.

Optionally, the method further includes:
determining whether path time accuracy of the updated best synchronization source is better than path time accuracy of the best time source; or,
determining whether a path hop count of the updated best synchronization source is better than a path hop count of the best time source.

According to a second aspect of the embodiments of the present disclosure, a network node is further provided, including: a processor;
the processor is configured to determine relevant information of a best synchronization source of the network node;
the processor is further configured to determine relevant information of a best time source of a first port of the network node;
the processor is further configured to determine port state of the first port of the network node when the source of the best synchronization source of the network node is not the first port.

Optionally, the processor is further configured to: when the source of the best synchronization source of the network node is not the first port, determine the port state of the first port of the network node according to the relevant information of the best synchronization source, relevant information of the network node, and relevant information of the best time source.

Optionally, the processor is further configured to: when the source of the best synchronization source of the network node is not the first port, and a type of the best time source does not belong to an old protocol type, determine the port state of the first port of the network node according to the relevant information of the best synchronization source, the relevant information of the network node, and the relevant information of the best time source.

Optionally, the processor is further configured to: when the source of the best synchronization source of the network node is not the first port, and the type of the best time source belongs to an old protocol type, determine the port state of the first port of the network node according to the relevant information of the best synchronization source and the relevant information of the best time source.

Optionally, the processor is further configured to: when the source of the best synchronization source of the network node is not the first port, obtain relevant information of the updated best synchronization source according to the relevant information of the best synchronization source and the relevant information of the network node; determine the port state of the first port of the network node according to the relevant information of the updated best synchronization source and the relevant information of the best time source.

Optionally, the processor is further configured to: if the relevant information of the updated best synchronization source is better than the relevant information of the best time source, determine that the port state of the first port of the network node is master state.

Optionally, the processor is further configured to: if the relevant information of the updated best synchronization source is not better than the relevant information of the best time source, determine that the port state of the first port of the network node is passive state.

Optionally, the processor is further configured to: determine whether path time accuracy of the updated best synchronization source is better than path time accuracy of the best time source; or, determine whether a path hop count of the updated best synchronization source is better than a path hop count of the best time source.

According to a third aspect of the embodiments of the present disclosure, a network node is further provided, including: a memory, a processor, a transceiver, and a program stored in the memory and executed on the processor, wherein the processor, when executes the program, implements the steps of the method for determining port state as described in the first aspect.

According to a fourth aspect of the embodiments of the present disclosure, a computer-readable storage medium is further provided, and the computer-readable storage medium stores a computer program, wherein the computer program, when executed by a processor, implements the steps of the method for determining port state as described in the first aspect.

In the embodiments of the present disclosure, a correct port state can be generated under different source selection principles, so that the synchronization network can correctly establish the port state, thereby running synchronously.

### BRIEF DESCRIPTION OF THE DRAWINGS

To better clarify technical solutions of embodiments of the present disclosure, drawings used in description of the embodiments of the present disclosure are briefly introduced hereinafter. Apparently, the described drawings merely illustrate a part of the disclosed embodiments. A person of ordinary skill in the art can obtain other drawings based on the described drawings without any creative efforts.
FIG. 1 is a first schematic diagram of a decision result of each port state in the related art;
FIG. 2 is a second schematic diagram of a decision result of each port state in the related art;
FIG. 3 is a first flowchart of a method for determining port state according to an embodiment of the present disclosure;
FIG. 4 is a second flowchart of a method for determining port state according to an embodiment of the present disclosure;
FIG. 5 is a first flowchart of determining a best source through a hop count comparison method in related art;
FIG. 6 is a second flowchart of determining a best source through a hop count comparison method in the related art;
FIG. 7 is a third flowchart of a method for determining port state according to an embodiment of the present disclosure;
FIG. 8 is a fourth flowchart of a method for determining port state according to an embodiment of the present disclosure;
FIG. 9 is a fifth flowchart of a method for determining port state according to an embodiment of the present disclosure;
FIG. 10 is first schematic diagram of a decision result of each port state according to an embodiment of the present disclosure;
FIG. 11 is a second schematic diagram of a decision result of each port state according to an embodiment of the present disclosure;
FIG. 12 is a third schematic diagram of a decision result of each port state in the related art;
FIG. 13 is a first schematic structural diagram of a network node according to an embodiment of the present disclosure; and
FIG. 14 is a second structural diagram of a network node according to an embodiment of the present disclosure.

### DETAILED DESCRIPTION OF THE EMBODIMENTS

In order to make technical problems to be solved, technical solutions and advantages of the present disclosure more clear, the present disclosure will be described in detail in conjunction with accompanying drawings and specific embodiments hereinafter.

The techniques described herein are not limited to Long Time Evolution (LTE)/LTE-Advanced (LTE-A), and may also be used for various wireless communication systems such as code division multiple access (CDMA), time division multiple access (TDMA), frequency division multiple access (FDMA), orthogonal frequency division multiple access (OFDMA), single-carrier frequency-division multiple access (SC-FDMA), and other systems, such as, the fifth-generation (5G) mobile communication system and subsequent evolution communication systems.

Terms "system" and "network" are often used interchangeably. The CDMA system may implement radio technologies such as CDMA2000, and universal terrestrial radio access (UTRA). The UTRA includes wideband code division multiple access (WCDMA) and other variants of CDMA. The TDMA system may implement radio technologies such as global system for mobile communications (GSM). The OFDMA system may implement radio technologies such as ultra mobile broadband (UMB), evolution-UTRA (E-UTRA), IEEE 802.11 (Wi-Fi), IEEE 802.16 (WiMAX), IEEE 802.20, or Flash-OFDM. The UTRA and E-UTRA are parts of universal mobile telecommunication system (UMTS). LTE and more advanced LTE (e.g., LTE-A) are new UMTS versions that use E-UTRA. The UTRA, E-UTRA, UMTS, LTE, LTE-A, and GSM are described in documents from an organization named "3rd Generation Partnership Project" (3GPP). The CDMA2000 and UMB are described in documents from an organization named "3rd Generation Partnership Project 2" (3GPP2). The techniques described herein may be used for the systems and radio technologies mentioned above as well as other systems and radio technologies.

The terms "first", "second" and the like in the description and claims of the present disclosure are used to distinguish similar objects, and are not necessarily used to describe a particular order or chronological order. It is to be understood that data used in this way may be interchangeable under appropriate circumstances, so that embodiments of the present disclosure described herein may be implemented in a sequence other than those illustrated or described herein.

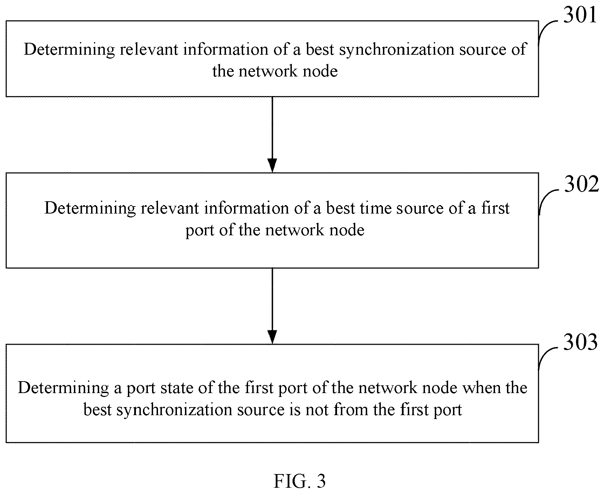

Referring to FIG. 3, an embodiment of the present disclosure provides a method for determining port state. An execution body of the method is a network node, and specific steps are as follows.

Step 301: determining relevant information of a best synchronization source of the network node.

It is understandable that the best synchronization source may be determined by a method in a related art and will not be described here.

In the embodiments of the present disclosure, the relevant information of the best synchronization source is related to the method of determining the best synchronization source. For example, when a path time accuracy is used to determine the best synchronization source, the relevant information of the best synchronization source may be a path time accuracy of the best synchronization source; when a hop count is used to determine the best synchronization source, the relevant information of the best synchronization source may be a hop count of the best synchronization source.

It should be noted that, in the following content of the embodiments of the present disclosure, only the relevant information of the best synchronization source is the path time accuracy of the best synchronization source or the hop count of the best synchronization source is taken as an example for description, but this does not mean the relevant information of the best synchronization source can only be the path time accuracy of the best synchronization source or the hop count of the best synchronization source.

Exemplarily, for determinging the best synchronization source according to the path time accuracy the relevant information may include one or more of the following: path time accuracy, grandmaster ID (GM ID), priority, clockClass, synchronization source accuracy (GM accuracy), synchronization source jitter (GM ID offsetScaledLogVarience), port ID and other information.

It is understandable that the relevant information of the best synchronization source is comparison information used to compare advantages and disadvantages of synchronization sources. There may be more than one step in the comparison (that is, a best synchronization source may be obtained by multiple comparison steps), then the relevant information of the best synchronization source may include a variety of comparison information. In an example of the present disclosure, only a case of comparing path time accuracies to obtain a comparison result is given, that is, it is an example that the other comparison information is considered to be the same, and a final decision is made by comparing the path time accuracies.

It is understandable that the path time accuracy may not be direct path time accuracy information, but calculated by other parameter information, such as a sum of time accuracy information per hop obtained through the port, and original information is time accuracy and hop count of an intermediate node.

It should be noted that in the embodiments of the present disclosure, the relevant information of the best synchronization source may be any information used for source selection comparison. If source selection comparison methods are different, the relevant information of the best synchronization source is also different. The relevant information of the best synchronization source may not be the path time accuracy of the best synchronization source or the hop count of the best synchronization source, but other information used for source selection comparison.

Step 302: determining relevant information of a best time source of a first port of the network node.

It is understandable that the best time source may be determined by a method in a related art, and will not be described herein. When the first port of the network node has only one time source, this time source is the best time source of the first port. For example, if the first port of the network node has only one time source A, then the time source A is the best time source for the first port of the network node.

In the embodiments of the present disclosure, the relevant information of the best time source is related to the method of determining the best time source. For example, when the path time accuracy is used to determine the best synchronization source, the relevant information of the best time source may be a path time accuracy of the best time source; when a hop count is used to determine the best time source, the relevant information of the best time source may be a hop count of the best time source.

It should be noted that, in the following content of the embodiments of the present disclosure, only the relevant information of the best time source is the path time accuracy of the best time source or the hop count of the best time source is taken as an example for description, but this does not mean the relevant information of the best time source can only be the path time accuracy of the best time source or the hop count of the best time source.

Exemplarily, for determining the best time source according to the path time accuracy, the relevant information may include one or more of the following: path time accuracy, grandmaster ID (GM ID), priority, clockClass, synchronization source accuracy (GM accuracy), synchronization source jitter (GM ID offsetScaledLogVarience), port ID and other information.

The relevant information of the best time source is comparison information used to compare advantages and disadvantages of time sources. There may be more than one step in the comparison (that is, a best time source may be obtained by multiple comparison steps), then the relevant information of the best time source may include a variety of comparison information. In an example of the present disclosure, only a case of comparing the path time accuracy to obtain a comparison result is given, that is, it is an example that the other comparison information is considered to be the same, and a final decision is made by comparing the path accuracies.

In an embodiment of the present disclosure, the relevant information of the best time source may be a type of the best time source. Exemplarily, the type of the best time source may be an old protocol type, or the type of the best time source may be a new protocol type, where the old protocol type refers to a message type that conforms to the scheme in the related art. Specifically, the type of the best time source of the first port of the network node may be determined in a variety of means, for example, through a message field of the best time source, and type-length-value (TLV) of a message, of course, it may also be determined in other means easily conceivable by those skilled in the art, and will not be repeated here.

It is understandable that the path time accuracy may not be direct path time accuracy information, but calculated by other parameter information, such as asum of the time accuracy information per hop obtained through the port, and original information is a time accuracy and a hop count of an intermediate node.

Step 303: determining a port state of the first port of the network node when the source of the best synchronization source of the network node is not the first port.

It is understandable that the network node in the embodiments of the present disclosure can simultaneously support different methods for determining the port state, for example, the network node simultaneously supports the method for determining the port state in the related art and the method for determining the port state in the embodiments of the present disclosure. After determining that the source of the best synchronization source of the network node is not the first port, the network node may choose to use which method for determining the port state, through a specific selection method. In some cases, the network node may choose to use the method for determining the port state in related art. In some cases, the network node may choose to use the method of determining the port state in the embodiments of the present disclosure.

In the embodiments of the present disclosure, a correct port state can be generated under different source selection principles, so that the synchronization network can correctly establish the port state, thereby running synchronously.

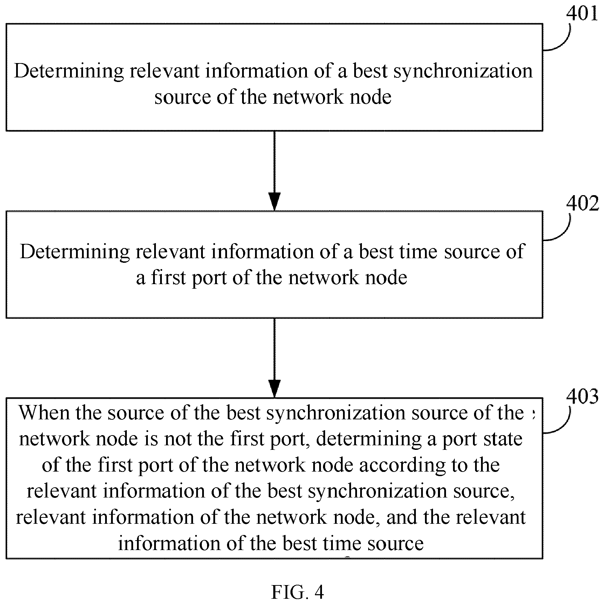

Referring to FIG. 4, an embodiment of the present disclosure further provides a method for determining port state. An execution body of the method is a network node, and the specific steps are as follows.

Step 401: determining relevant information of a best synchronization source of the network node.

It should be noted that the step 401 is the same as the step 301, and relevant content will not be described here.

Step 402: determining relevant information of a best time source of a first port of the network node;

It should be noted that the step 402 is the same as the step 302, and relevant content will not be described here.

Step 403: when the source of the best synchronization source of the network node is not the first port, determining a port state of the first port of the network node according to the relevant information of the best synchronization source, relevant information of the network node, and the relevant information of the best time source.

In the embodiment of the present disclosure, optionally, in the step 403, relevant information of an updated best synchronization source may be obtained according to the relevant information of the best synchronization source and the relevant information of the network node; and then the port state of the first port of the network node is determined according to the relevant information of the updated best synchronization source and the relevant information of the best time source.

For example, after the path time accuracy of the network node is added to the path time accuracy of the best synchronization source of the network node, the path time accuracy of the updated best synchronization source can be obtained. It is understandable that when other relevant information is used, the method for obtaining the relevant information of the updated best synchronization source is similar to this, and will not be repeated here.

In the embodiment of the present disclosure, optionally, one way for determining the port state of the first port of the network node may include:
determining whether the relevant information of the updated best synchronization source is better than the relevant information of the best time source; if the relevant information of the updated best synchronization source is better than the relevant information of the best time source, determining that the port state of the first port of the network node is a master state.

It should be noted that when determining whether the relevant information of the updated best synchronization source is better or not better than the relevant information of the best time source, the "better than" may include a situation of "better by Topology than", that is, "better than" may include "better than" results and "better by Topology than" results in related art.

That is, "A is better than B" in source selection in the related art belongs to "A is better than B" in source selection in the embodiments of the present disclosure. In other unlisted situations, as long as it can be obtained that one is better (or stronger) than the other in source selection comparison, it is considered to fall into the scope of "A is better than B" in source selection in the embodiments of the present disclosure, for example, a path time accuracy of A is better than that of B in source selection, a hop count of A is better than that of B in source selection, and an ID port number of A is better than the ID port number of B in source selection.

Further, if the relevant information of the updated best synchronization source is not better than the relevant information of the best time source, the port state of the first port of the network node is determined to be a passive state.

In the embodiments of the present disclosure, optionally, whether the relevant information of the updated best synchronization source is better than the relevant information of the best time source may be determined in the following modes.

Example 1: determining whether a path time accuracy of an updated best synchronization source is better than a path time accuracy of the best time source.

Example 2: determining whether a path hop count of an updated best synchronization source is better than a path hop count of the best time source.

Of course, it is understandable that in addition to the above two modes, other relevant information may also be used to determine whether the relevant information of the updated best synchronization source is better than the relevant information of the best time source. Other determining modes are similar to this, and will not be repeated here.

Exemplarily, the network node determines a best synchronization source, and the best synchronization source is E_{best}. When a source port of E_{best} is not a port r of the network node, a port state of the port r is determined, that is, the state of the port r is determined to be a master state or a passive state.

One mode of determining the port state of the port r is as follows: a data set of a best time source of the port r of the network node is E_{rbest}, an updated data set (for example, E'_{best}) obtained by adding data of the network node to the data set E_{best} of the best synchronization source of the network node is compared with the best time source data set E_{rbest} of the port r, to determine whether the state of the port r is the master state or the passive state.

If E'_{best} is better than E_{rbest} (including E'_{best} is better by Topology than E_{rbest}), the port state of the port r is determined to be the master state, otherwise, the port state of the port r is determined to be the passive state.

It is understandable that conditions for determining whether E'_{best} is better than E_{rbest} may be the same as conditions for determining the better in the source selection, that is, E'_{best} and E_{rbest} are considered to be two source data sets participating in the comparison. It can be determined whether E'_{best} is better than E_{rbest} according to the source selection determining conditions in the related art.

In the embodiments of the present disclosure, one comparison step or multiple comparison steps may be used to determine a best source, that is, whether E'_{best} is better than E_{rbest.}

### Scenario 1: determining a best source through one comparison step.

Exemplarily, one comparison step is as follows.

### (1) Determining a best source according to a hop count.

If a best source is selected based on a shortest hop count, which of E'_{best} and E_{rbest} has the shortest hop count is considered to be the best source. For example, if the hop count of E'_{best} is compared with the hop count of E_{rbest}, the hop count of E'_{best} is shorter, and E'_{best} is determined to be the best source.

### (2) Determining a best source according to a path time accuracy.

If a best source is selected based on a best path time accuracy on a passed path, then which of E'_{best} or E_{rbest} has the best time accuracy will be considered to be the best source. For example, a path time accuracy of E'_{best} is compared with a path time accuracy of E_{rbest}, the path time accuracy of E'_{best} is better, then E'_{best} is determined to be the best source.

The relevant information of the updated best synchronization source may be: an updated data set obtained by adding data of the network node to the relevant information of the best synchronization source of the network node.

For exambple:
(1) If a best source is selected based on a shortest hop count, the data set may include a hop count reference for comparing hop counts, such as step removed, then the updated data set obtained by adding the data set of the network node to the best synchronization source E_{best} of the network node needs to update corresponding parameters, for example, the hop count in the data set needs to be increased by one after passing through the network node.
(2) If a best source is selected based on a best time accuracy in a passed path, the data set may include parameters for comparing the path time accuracies, then the updated data set obtained by adding the data set of the network node to the best synchronization source E_{best} of the network node needs to update corresponding parameters. For example, the path time accuracy in the data set needs to be added with the time accuracy of the network node after passing through the network node.

### Scenario 2: Determining a best source through multiple comparison steps.

It should be noted that if a comparison process of a best source has more than one comparison step, i.e., including multiple comparison steps (for example, including comparison of hop counts, comparison of path time accuracies, and comparison of ID port numbers, etc.), the best source is determined according to the multiple comparison steps. The comparison steps involve multiple information parameters, so updating in an acquisition method of E'_{best} also requires updating multiple parameters.

Exemplarily, if a best source is selected according to the best time accuracy in a passed path, in a case that path time accuracies of two are the same, then it is continued to compare hop counts, and one with the shortest hop count is considered to be the best. Then, the data set includes parameters for comparing the path time accuracies, the hop counts, etc. The updated data set obtained by adding the data of the network node to the best synchronization source E_{best} of the network node needs to update corresponding parameters. For example, after passing through the network node, the path time accuracy in the data set needs to be added with the time accuracy of the network node, and the hop count needs to be increased by one.

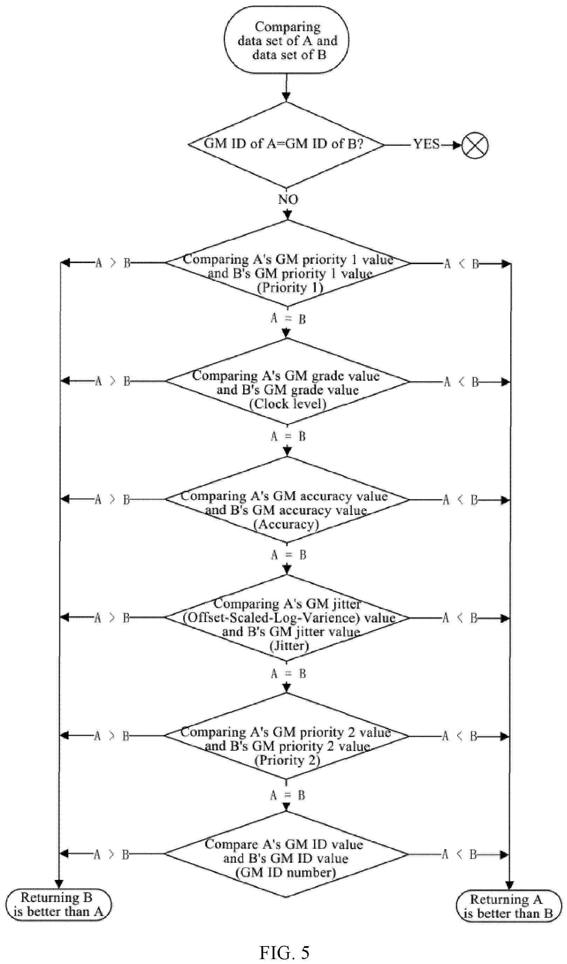

Referring to FIG. 5, it illustrates a process of determining a best source by means of hop count comparison in the related art.

It can be seen from the process in FIG. 5 that source selection may go through multiple comparison steps, among which the hop count is an important basis for comparison, but it is not the only basis. When the synchronization source is the same (the same GM ID), it will enter a step of hop count comparison.

The process of source selection may have a "better than" result and a "better by Topology than" result, both of which belong to "A is better than B" situation in the source selection in the embodiments of the present disclosure.

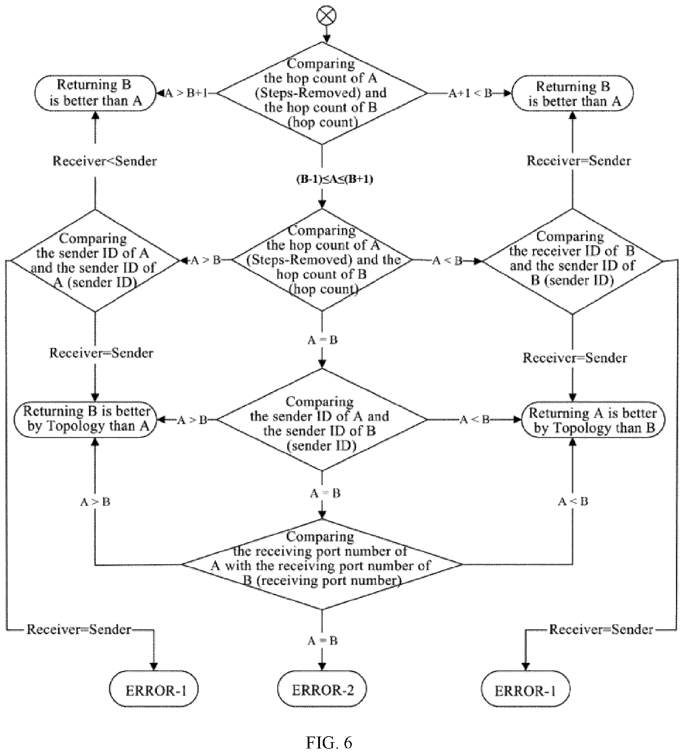

For determining a best source according to path time accuracy, comparing path time accuracies may also be one of multiple comparison steps, and is not necessarily the only step. For example, one step of first performing comparison of path time accuracies (not shown) may be added before the step of comparing the hop count in FIG. 6. Therefore, in this comparison method, the process of source selection may still have a "better than result" and a "better by Topology than" result, both of which belong to "A is better than B" situation in the source selection in the embodiments of the present disclosure.

For other source selection methods which are not listed, steps of source selection may similarly include multiple comparison steps. The relevant information involves multiple parameters, and different branch results may be obtained. In the end, it is obtained vai comparision that A is better than B or A is not better than B, which can be used in subsequent determination of port state according to the embodiments of the present disclosure.

In the embodiments of the present disclosure, a correct port state can be generated under different source selection principles, so that the synchronization network can correctly establish the port state, thereby running synchronously.

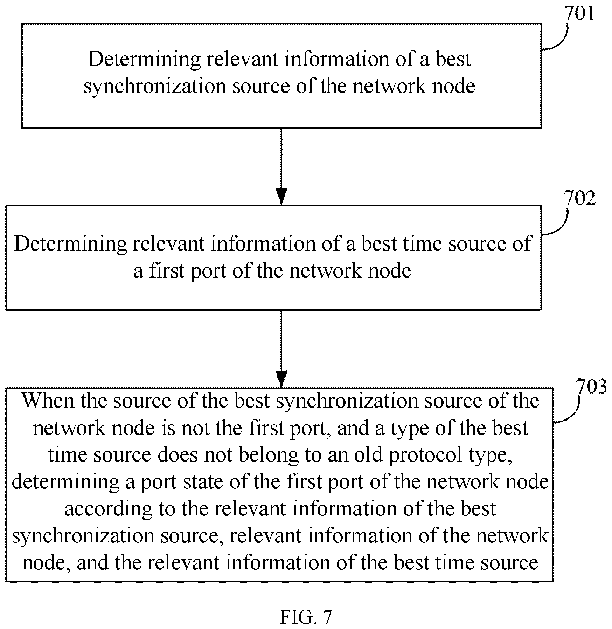

Referring to FIG. 7, an embodiment of the present disclosure further provides a method for determining port state. An execution subject of the method is a network node, and the specific steps are as follows.

Step 701: determining relevant information of a best synchronization source of the network node.

It should be noted that the step 701 is the same as the step 301, and the relevant content will not be described here.

Step 702: determining relevant information of a best time source of a first port of the network node.

It should be noted that the step 702 is the same as the step 302, and the relevant content will not be described here.

Step 703: when the source of the best synchronization source of the network node is not the first port, and a type of the best time source does not belong to an old protocol type, determining a port state of the first port of the network node according to the relevant information of the best synchronization source, relevant information of the network node, and the relevant information of the best time source.

In the embodiment of the present disclosure, the relevant information of the best time source may be the type of the best time source. Exemplarily, the type of the best time source may be an old protocol type, or the type of the best time source may be a new protocol type, where the old protocol type refers to a message type that conforms to the scheme in the relatedart. Specifically, the type of the best time source of the first port of the network node may be determined in a variety of means, for example, through a message field of the best time source, and TLV of a message, of course, it may also be determined in other means easily conceivable by those skilled in the art, and will not be repeated here.

In the embodiment of the present disclosure, description of "determining a port state of the first port of the network node according to the relevant information of the best synchronization source, relevant information of the network node, and the relevant information of the best time source" in the step 703 may refer to the introduction in the step 403, and will not be repeated here.

In the embodiments of the present disclosure, a correct port state can be generated under different source selection principles, so that the synchronization network can correctly establish the port state, thereby running synchronously.

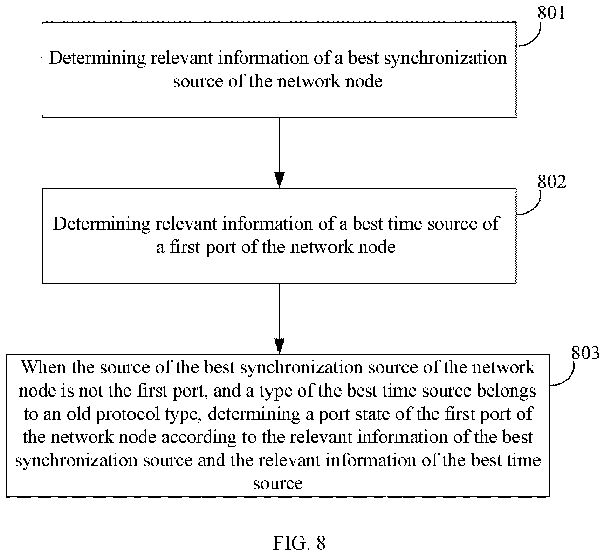

Referring to FIG. 8, an embodiment of the present disclosure further provides a method for determining port state. An execution subject of the method is a network node, and the specific steps are as follows.

Step 801: determining relevant information of a best synchronization source of the network node.

It should be noted that the step 801 is the same as the step 301, and the relevant content will not be described here.

Step 802: determining relevant information of a best time source of a first port of the network node.

It should be noted that the step 802 is the same as the step 302, and the relevant content will not be described here.

Step 803: when the source of the best synchronization source of the network node is not the first port, and a type of the best time source belongs to an old protocol type, determining a port state of the first port of the network node according to the relevant information of the best synchronization source and the relevant information of the best time source.

In the embodiment of the present disclosure, the relevant information of the best time source may be the type of the best time source. Exemplarily, the type of the best time source may be an old protocol type, or the type of the best time source may be a new protocol type, where the old protocol type refers to a message type that conforms to the scheme in the related art. Specifically, the type of the best time source of the first port of the network node may be determined in a variety of means, for example, through a message field of the best time source, and a TLV of a message, of course, it may also be determined in other means easily conceivable by those skilled in the art, and will not be repeated here.

Exemplarily, in the embodiment of the present disclosure, a data set of the best synchronization source of the network node related to the old protocol is E_{best}, and a data set of a best time source of a port r of the network node is E_{rbest}, and according to comparison of E_{best} and E_{rbest}, it is determined whether a state of the port r is a master state or a passive state.

Examples of specific methods may include:
(1) when a comparison result is that the data set E_{best} of the best synchronization source related to the old protocol is better by Topology than E_{rbest}, it is determined that the state of the port r is the passive state, or a comparison result is that the E_{rbest} is better than the data set E_{best} of the best synchronization source related to the old protocol, it is determined that the state of the port r is the passive state;
(2) for other results that do not satisfy the comparison result of above (1), it is determined that the state of the port r is the master state.

In the embodiments of the present disclosure, a correct port state can be generated under different source selection principles, so that the synchronization network can correctly establish the port state, thereby running synchronously.

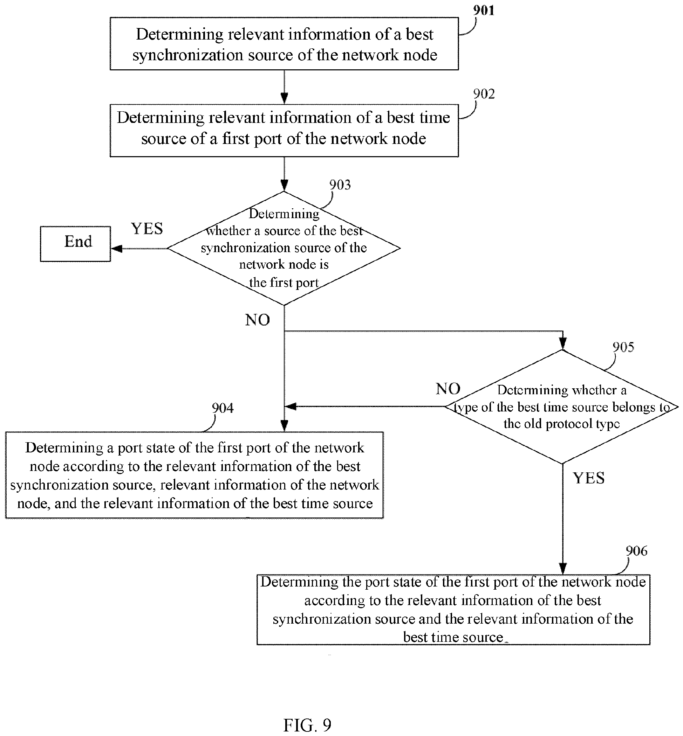

Referring to FIG. 9, an embodiment of the present disclosure further provides a method for determining port state. An execution subject of the method is a network node, and the specific steps are as follows.

Step 901: determining relevant information of a best synchronization source of the network node;

It should be noted that the step 901 is the same as the step 301, and the relevant content will not be described here.

Step 902: determining relevant information of a best time source of a first port of the network node;

It should be noted that the step 902 is the same as the step 302, and the relevant content will not be described here.

Step 903: determining whether a source of the best synchronization source is the first port; if the source of the best synchronization source of the network node is not the first port, performing step 904 or step 905; otherwise, ending this process, that is, ending the process shown in FIG. 9.

It can be understood that, in the embodiments of the present disclosure, when the source of the best synchronization source of the network node is not the first port, there is no specific limitation on whether to perform the step 904 or the step 905. Those skilled in the art can set whether to perform the step 904 or the step 905 according to the specific situation.

It can also be understood that if the source of the best synchronization source is the first port, operations in the related art can be performed, and the specific procedures of the operations in the related art are not described here.

Step 904: determining a port state of the first port of the network node according to the relevant information of the best synchronization source, relevant information of the network node, and the relevant information of the best time source.

It should be noted that the description of the step 904 can refer to the description of the step 403.

Step 905: determining whether a type of the best time source belongs to the old protocol type; if the type of the best time source does not belong to the old protocol type, performing the step 904; otherwise, performing step 906.

In the embodiments of the present disclosure, the relevant information of the best time source may be the type of the best time source. Exemplarily, the type of the best time source may be an old protocol type, or the type of the best time source may be a new protocol type, where the old protocol type refers to a message type that conforms to the scheme in the related art.

Specifically, the type of the best time source of the first port of the network node may be determined in a variety of means, for example, through a message field of the best time source, and a TLV of a message, of course, it may also be determined in other means easily conceivable by those skilled in the art, and will not be repeated here.

Step 906: determining the port state of the first port of the network node according to the relevant information of the best synchronization source and the relevant information of the best time source.

It should be noted that the description of the step 906 can refer to the description of the step 803.

In the embodiments of the present disclosure, a correct port state can be generated under different source selection principles, so that the synchronization network can correctly establish the port state, thereby running synchronously.

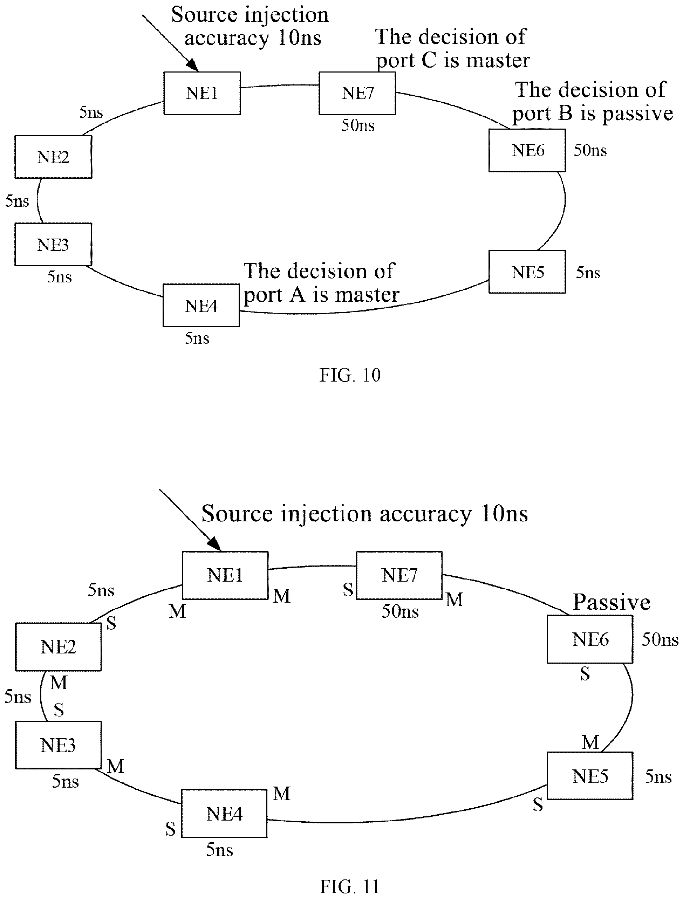

Referring to FIG. 10, the following description takes determining a best source based on a best time accuracy in a passed path as an example for illustration. Other processes for determining a best source are similar to this, and will not be described here.

### I. Process of determing a state of a port A of NE4

(1) a best synchronization source E_{best} of NE4 is from a left port, because a path time accuracy of the left port is the best (i.e., upstream accuracy 10ns+NE1 5ns+NE2 5ns+NE3 5ns=25ns), then the path time accuracy of E_{best} is 25ns.
(2) a best time source E_{rbest} of a port A of NE4 is passed down from a right ring, and a path time accuracy is an upstream accuracy 10ns+NE7 50ns+NE6 50ns+NE5 5ns=115ns.
(3) When determining that a source of E_{best} is not a certain port r, it is necessary to determine whether a port state of the port r is a master state or a passive state. A source of NE4's E_{best} is not the port A. Therefore, it is necessary to determine whether the port A is in the master state or passive state.
(4) According to comparison of an updated data set E'_{best} obtained by adding data of the network node to the best synchronization source E_{best} of NE4 with the best source E_{rbest} of the port r, determining whether the state of the port r is the master state or the passive state. A path time accuracy of the updated data set E'_{best} obtained by adding the data of the network node to the best synchronization source E_{best} of NE4 is E_{best} 25ns + NE4 network node accuracy 5ns=30ns, and a path time accuracy of the E_{rbest} of the port A is 115ns.
(5) E'_{best} is better than E_{rbest}, then the port r is determined to be in the master state, and the port A is determined to be in the master state according to the comparison of path time accuracies.

### II. Process of determing a state of a port B of NE6

(1) a best source E_{best} of NE6 is from a lower port shown in the drawing, because a path time accuracy of a port from the left ring is the best (i.e., upstream accuracy 10ns+NE1 5ns+NE2 5ns+NE3 5ns+ NE4 5ns +NE5 5ns =35ns ), then a path time accuracy of the E_{best} is 35ns.
(2) a best time source E_{rbest} of a port B of NE6 is passed down from the right ring, and a path time accuracy is an upstream accuracy 10ns+NE7 50ns=60ns.
(3) When determining that a source of E_{best} is not a certain port r, it is necessary to determine whether a state of the port r is a master state or apassive state. A source of NE6's E_{best} is not the port B. Therefore, it is necessary to determine whether the port B is in the master state or the passive state.
(4) According to comparison of an updated data set E'_{best} obtained by adding data of the network node to the best synchronization source E_{best} of the network node with the best source E_{rbest} of the port r, determining whether the state of the port r is the master state or the passive state. A path time accuracy of the updated data set E'_{best} obtained by adding the data of the network node to the best synchronization source E_{best} of NE6 is E_{best} 35ns + NE6 network node accuracy 50ns=85ns, and a path time accuracy of the E_{rbest} of the port B is 60ns.
(5) E'_{best} is better than E_{rbest}, then the port r is determined to be in the master state, otherwise the port r is determined to be in the passive state. According to the comparison of path time accuracies, the port B is determined to be in passive state.

### III. Process of determing a state of a port C of NE7

(1) a best source E_{best} of NE7 is from a left port on the figure, because a path time accuracy of this port is the best (i.e., an upstream accuracy 10ns+NE1 5ns=15ns), then a path time accuracy of the E_{best} is 15ns.
(2) a best time source E_{rbest} of a port C of NE7 is passed down from the left ring, and a path time accuracy is an upstream accuracy 10ns+NE1 5ns+NE2 5ns+NE3 5ns+ NE4 5ns +NE5 5ns+ NE6 50ns =85ns.
(3) when determining that a source of E_{best} is not a port r, it is necessary to determine whether a state of the port r is the master state or the passive state. A source of NE7's E_{best} is not the port C. Therefore, it is necessary to determine whether the port C is in the master state or the passive state.
(4) according to comparison of an updated data set E'_{best} obtained by adding data of the network node to the best synchronization source E_{best} of the network node with the best source E_{rbest} of the port r, determining whether the state of the port r is the master state or the passive state. A path time accuracy of the updated data set E'_{best} obtained by adding the data of the network node to the best synchronization source E_{best} of NE6 is 15ns + NE7 network node accuracy 50ns=65ns, and a path time accuracy of the E_{rbest} of the port C is 85ns.
(5) E'_{best} is better than E_{rbest}, then the port r is determined to be in the master state. According to comparison of path time accuracies, the port C is determined to be in the master state.

According to the embodiment of the present disclosure, the port state of each node on the ring of FIG. 10 is finally determined as shown in FIG. 11, where S represents the slave state and M represents the master state. It can be seen that each network node can correctly determine ports in the mater state according to the path time accuracies, and one port in the entire loop is determined to be in the passive state, which can prevent generation of a synchronization loop. Moreover, there is no link, of which two ends are in the passive state, thereby guaranting swithong when the path is switched.

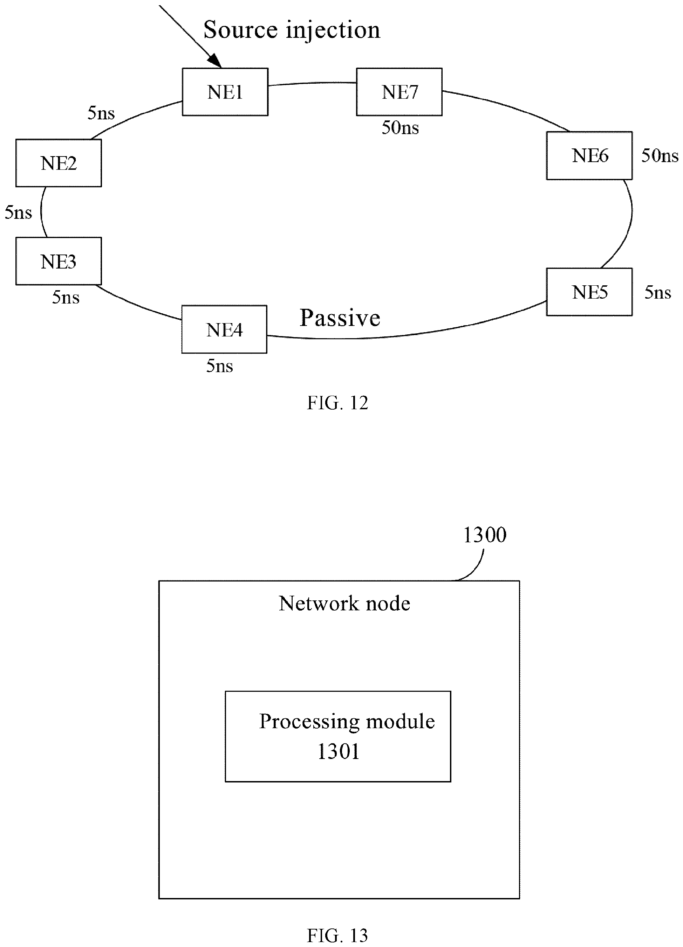

As comparing with the methods for determining the port state in related art, referring to FIG. 12, Originally, NE5 should track NE4 according to the path time accuracy. However, because the state decision method is not applicable, the right port of NE4 is in passive state, then a tracking path of the decision will be broken, and NE4 can not be tracked normally.

An embodiment of the present disclosure further provides a network node. Since the principle of the network node to solve the problem is similar to that of the method for determining port state in the embodiments of the present disclosure, the implementation of the network node can refer to the implementation of the method, and the repetition will not be described.

Referring to FIG. 13, an embodiment of the present disclosure further provides a network node, the network node 1300 includes: a processor 1301.

The processor 1301 is configured to determine relevant information of a best synchronization source of the network node.

The processor 1301 is further configured to determine relevant information of a best time source of a first port of the network node.

The processor 1301 is further configured to, when a source of the best synchronization source of the network node is not the first port, determine a port state of the first port of the network node according to the relevant information of the best synchronization source, relevant information of the network node, and the relevant information of the best time source.

In the embodiment of the present disclosure, optionally, the processor 1301 is further configured to, when the source of the best synchronization source of the network node is not the first port, determine the port state of the first port of the network node according to the relevant information of the best synchronization source, the relevant information of the network node, and relevant information of the best time source.

In the embodiment of the present disclosure, optionally, the processor 1301 is further configured to, when the source of the best synchronization source of the network node is not the first port, and a type of the best time source does not belong to an old protocol type, determine the port state of the first port of the network node according to the relevant information of the best synchronization source, the relevant information of the network node, and the relevant information of the best time source.

In the embodiment of the present disclosure, optionally, the processor 1301 is further configured to, when the source of the best synchronization source of the network node is not the first port, and the type of the best time source belongs to an old protocol type, determine the port state of the first port of the network node according to the relevant information of the best synchronization source and the relevant information of the best time source.

In the embodiment of the present disclosure, optionally, the processor 1301 is further configured to, when the source of the best synchronization source of the network node is not the first port, obtain relevant information of an updated best synchronization source according to the relevant information of the best synchronization source and the relevant information of the network node; determine the port state of the first port of the network node according to the relevant information of the updated best synchronization source and the relevant information of the best time source.

In the embodiment of the present disclosure, optionally, the processor 1301 is further configured to, if the relevant information of the updated best synchronization source is better than the relevant information of the best time source, determine that the port state of the first port of the network node is master state.

In the embodiment of the present disclosure, optionally, the processor 1301 is further configured to, if the relevant information of the updated best synchronization source is not better than the relevant information of the best time source, determine that the port state of the first port of the network node is passive state.

In the embodiment of the present disclosure, optionally, the processor 1301 is further configured to, determine whether a path time accuracy of an updated best synchronization source is better than path time accuracy of the best time source; or, determine whether a hop count of an updated best synchronization source is better than a hop count of the best time source.

The network node provided by the embodiment of the present disclosure can execute the above method embodiment, and the implementation principle and technical effect are similar, and the details are not repeated here in this embodiment.

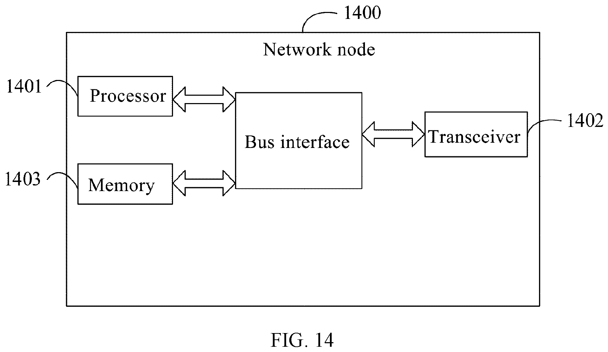

Referring to FIG. 14, an embodiment of the present disclosure provides another network node 1400, including: a processor 1401, a transceiver 1402, a memory 1403, and a bus interface.

The processor 1401 may be responsible for managing the bus architecture and general processing. The memory 1403 may store data used by the processor 1401 when performing operations.

In the embodiment of the present disclosure, the network node 1400 may further include: a computer program that is stored in the memory 1403 and can run on the processor 1401. The computer program is executed by the processor 1401 to implement the steps of: determining relevant information of a best synchronization source of the network node; determining relevant information of a best time source of a first port of the network node; when a source of the best synchronization source of the network node is not the first port, determining a port state of the first port of the network node according to the relevant information of the best synchronization source, relevant information of the network node, and relevant information of the best time source.

In FIG. 14, the bus architecture may include any number of interconnected buses and bridges, and specifically linked by various circuits including one or more processors specifically represented by the processor 1401 and memory represented by the memory 1403. The bus architecture may also connect various other circuits such as peripherals, voltage regulators and power management circuits, which is well known in the art. Therefore, a detailed description thereof is omitted herein. A bus interface provides an interface. The transceiver 1402 may include a plurality of elements, that is, a transmitter and a receiver, to provide a unit for communication with various other apparatuses on a transmission medium.

An embodiment of the present disclosure further provides a computer-readable storage medium. The computer-readable storage medium stores a computer program. The computer program is executed by a processor to implements the steps of the method for determining port state as described above.

It is to be understood that reference throughout the specification to "one embodiment" or "an embodiment" means that a particular feature, structure, or characteristic associated with the embodiment is included in at least one embodiment of the present disclosure. Thus, appearances of "in one embodiment" or "in an embodiment" do not mean the same embodiment. Furthermore, these specific features, structures, or characteristics may be combined in any suitable manner in one or more embodiments.

In the various embodiments of the present disclosure, it is to be understood that sequence numbers of processes described above are not intended to mean order of execution, and that the order of execution of the processes should be determined by their function and intrinsic logic, and should not constitute any limitation on the implementation of the embodiments of the present disclosure.

In the embodiments provided herein, it is to be understood that "B corresponding to A" means that B is associated with A, from which B can be determined. It should also be understood, however, that determining B from A does not mean determining B from A only, but may also determine B from A and/or other information.

In the embodiments provided in this application, it should be understood that the disclosed device and method may be implemented in other ways. For example, the device embodiments described above are only schematic. For example, the division of the unit is only a logical function division, and there may be other divisions in actual embodiment, for example, multiple units or components may be combined or may be integrated into another system, or some features may be ignored, or not implemented. In addition, the displayed or discussed mutual coupling or direct coupling or communication connection may be indirect coupling or communication connection through some interfaces, devices or units, and may be in electrical, mechanical, or other forms.

In addition, each functional unit in each embodiment of the present disclosure may be integrated into one processing unit, or each unit may exist alone physically, or two or more units may be integrated into one unit. The above-mentioned integrated unit may be realized in the form of hardware, or in the form of hardware plus software functional unit.

The software functional units implemented in a software form may be stored in a computer-readable medium. These software functional units may be stored in a storage medium and include instructions so as to enable a computer device (e.g., a personal computer, a server or network device) to execute parts of the steps of the method according to the embodiments of the present disclosure. The storage medium includes various medium capable of storing therein program codes, e.g., a U disk, a mobile hard disk, a Read-Only Memory (ROM), a Random Access Memory (RAM), a magnetic disk or an optical disk.

It may be understood that these embodiments described in the embodiments of this disclosure may be implemented by hardware, software, firmware, middleware, microcode, or a combination thereof. For a hardware implementation, a processing unit may be implemented in one or more application specific integrated circuits (ASICs), a digital signal processor (DSP), a digital singal processing device (DSPD), a programmable logic device (PLD), a field-programmable gate array (FPGA), a general purpose processor, a controller, a microcontroller, a microprocessor, another electronic unit used for performing the functions described in this disclosure, or a combination thereof.

For a software implementation, the technologies described in the embodiments of this disclosure may be implemented by using a module (e.g. a process, function, or the like) for performing the functions described in the embodiments of the present disclosure. Software code may be stored in a memory and executed by a processor. The memory may be implemented inside the processor or outside the processor.

The above are optional implementations of the present disclosure. It should be appreciated that a person skilled in the art may make further modifications and improvements without departing from the principle of the present disclosure, and these modifications and improvements shall also fall within the scope of the present disclosure.

## Claims

1. A method for determining port state, applied to a network node, comprising:
determining relevant information of a best synchronization source of the network node;
determining relevant information of a best time source of a first port of the network node; and
determining a port state of the first port of the network node when a source of the best synchronization source of the network node is not the first port.

2. The method according to claim 1, wherein, determining the port state of the first port of the network node when the source of the best synchronization source of the network node is not the first port, comprises:
when the source of the best synchronization source of the network node is not the first port, determining the port state of the first port of the network node according to the relevant information of the best synchronization source, relevant information of the network node, and the relevant information of the best time source.

3. The method according to claim 1, wherein, determining the port state of the first port of the network node when the source of the best synchronization source of the network node is not the first port, comprises:
when the source of the best synchronization source of the network node is not the first port, and a type of the best time source does not belong to an old protocol type, determining the port state of the first port of the network node according to the relevant information of the best synchronization source, relevant information of the network node, and the relevant information of the best time source.

4. The method according to claim 1, wherein, determining the port state of the first port of the network node when the source of the best synchronization source of the network node is not the first port, comprises:
when the source of the best synchronization source of the network node is not the first port, and a type of the best time source belongs to an old protocol type, determining the port state of the first port of the network node according to the relevant information of the best synchronization source and the relevant information of the best time source.

5. The method according to any one of claims 1 to 3, further comprising:
obtaining relevant information of an updated best synchronization source according to the relevant information of the best synchronization source and relevant information of the network node;
determining the port state of the first port of the network node according to the relevant information of the updated best synchronization source and the relevant information of the best time source.

6. The method according to any one of claims 1 to 3, further comprising: obtaining relevant information of an updated best synchronization source according to the relevant information of the best synchronization source and relevant information of the network node;
if the relevant information of the updated best synchronization source is better than the relevant information of the best time source, determining that the port state of the first port of the network node is a master state.

7. The method according to any one of claims 1 to 3, further comprising: obtaining relevant information of an updated best synchronization source according to the relevant information of the best synchronization source and relevant information of the network node;
if the relevant information of the updated best synchronization source is not better than the relevant information of the best time source, determining that the port state of the first port of the network node is a passive state.

8. The method accroding to claim 6 or 7, further comprising:
determining whether a path time accuracy of the updated best synchronization source is better than a path time accuracy of the best time source; or,
determining whether a path hop count of the updated best synchronization source is better than a path hop count of the best time source.

9. A network node, comprising: a processor;
wherein the processor is configured to determine relevant information of a best synchronization source of the network node;
the processor is further configured to determine relevant information of a best time source of a first port of the network node;
the processor is further configured to determine a port state of the first port of the network node when a source of the best synchronization source of the network node is not the first port.

10. The network node according to claim 9, wherein, the processor is further configured to, when the source of the best synchronization source of the network node is not the first port, determine the port state of the first port of the network node according to the relevant information of the best synchronization source, relevant information of the network node, and the relevant information of the best time source.

11. The network node according to claim 9, wherein, the processor is further configured to, when the source of the best synchronization source of the network node is not the first port, and a type of the best time source does not belong to an old protocol type, determine the port state of the first port of the network node according to the relevant information of the best synchronization source, relevant information of the network node, and the relevant information of the best time source.

12. The network node according to claim 9, wherein, the processor is further configured to, when the source of the best synchronization source of the network node is not the first port, and a type of the best time source belongs to an old protocol type, determine the port state of the first port of the network node according to the relevant information of the best synchronization source and the relevant information of the best time source.

13. The network node according to any one of claims 9 to 11, wherein, the processor is further configured to, when the source of the best synchronization source of the network node is not the first port, obtain relevant information of an updated best synchronization source according to the relevant information of the best synchronization source and relevant information of the network node; determine the port state of the first port of the network node according to the relevant information of the updated best synchronization source and the relevant information of the best time source.

14. The network node according to any one of claims 9 to 11, wherein, the processor is further configured to, when the source of the best synchronization source of the network node is not the first port, obtain relevant information of an updated best synchronization source according to the relevant information of the best synchronization source and relevant information of the network node; if the relevant information of the updated best synchronization source is better than the relevant information of the best time source, determine that the port state of the first port of the network node is master state.

15. The network node according to any one of claims 9 to 11, wherein, the processor is further configured to, when the source of the best synchronization source of the network node is not the first port, obtain relevant information of an updated best synchronization source according to the relevant information of the best synchronization source and the relevant information of the network node; if the relevant information of the updated best synchronization source is not better than the relevant information of the best time source, determine that the port state of the first port of the network node is passive state.

16. The network node according to claim 14 or 15, wherein, the processor is further configured to, determine whether a path time accuracy of the updated best synchronization source is better than a path time accuracy of the best time source; or, determine whether a path hop count of the updated best synchronization source is better than a path hop count of the best time source.

17. A network node, comprising: a memory, a processor, a transceiver, and a program stored in the memory and executed on the processor, wherein the processor executes the program to implement the steps of the method for determining port state according to any one of claims 1 to 8.

18. A computer-readable storage medium comprising a computer program stored thereon, wherein the computer program is executed by a processor to implement the steps of the method for determining port state according to any one of claims 1 to 8.
